# EUROPEAN PATENT APPLICATION

(11) **EP 1 506 709 A1**
(43) Date of publication of application: **16.02.2005**
(21) Application number: 03722616.4
(22) Date of filing: 14.05.2003
(51) Int. Cl.: A01K 95/00, A01K 97/02

(54) **LAUNCH WEIGHT WITH BAIT AND A FISHING LINE FOR RECREATIONAL FISHING**

(30) Priority: 17.05.2002 ES 200201333 U
(71) Applicant: Code Iluminazion, S.L., 46900 Torrent (ES)
(72) Inventor: ROSER MARTINEZ, Jose, Luis, E-46900 Torrent (ES)
(74) Representative: Munoz Garcia, Antonio
(86) International application number: PCT/ES2003/000213
(87) International publication number: WO 2003/096805

(57) **Abstract**

CASTING WEIGHT OF BAIT AND FISHING LINE, FOR ANGLING, which consists of a bi-metal part that is the weight proper, crowned on its lower end with a conical part (1); in the upper part (2) there is a longitudinal cavity (3), a metal stick (4) that is inserted through the lower part of the weight (2), which has an orifice (5) for that purpose, being retained by a prisoner screw (6), two small reels (9) inserted in the metal stick (4) in order to wind up the fishing line (10), which is inserted in the slot (11), made on the body (2) in order to lodge the fish hook and the bait in the cavity (3).

## Description

### OBJECT.

The object concerned in the present Descriptive Report, refers to a "Thrower weight of bait and fishing line, for angling".

### BACKGROUND.

The type of angling known as "casting" entails the use of very elastic materials to manufacture fishing rods so that the swaying of the latter facilitates the casting of a small weight that, together with the bait and the fish hook, moves a considerable distance away from the point where the fisherman is.

In its practice, live bait is used, of a relatively high price and which, as a result of the shakes that the weight undergoes in the casting process, are frequently lost during their movement, before they reach the maximum distance and get into the water.

### DESCRIPTION OF THE INVENTION

The purpose of the invention that constitutes the object of the present report entails the elimination of the disadvantage of losing the bait, typical of the known casting weights, according to the present description, being conceived and designed taking this priority objective into account.

For that purpose, the structure of that object has been modified, in order to get the substantial improvement of its functional characteristics.

Indeed, the casting weight known consists of a lead part (because of this it receives the generic name of "lead"), with a pointed ellipsoidal shape, which accompanies the fish hook that carries the bait.

The improved structure of the weight claimed comprises the following elements:
- A bi-metal part that is the weight proper, of ellipsoidal shape, crowned on its lower end when in use position with a conical part, the upper part made of brass in order to facilitate the carving in that of a longitudinal cavity, whereas the conical end is made of lead in order to decrease the cost of the part.
- A metal stick, preferably made of stainless steel, which is inserted through its lower part in the upper part of the weight, where an orifice has been drilled for that purpose, being retained by a fixing screw, whereas its upper part takes on the shape of a hook in order to link it to the end part of the line (stretch of thread between the reel of the rod and the float of positional signing of fish hook and bait).
- Two small reels inserted in the stick, with variable discretionary gap, in order to wind up the slack of thread that joins the fish hook with the lead around them, and which is independent of the fishing line or line.
- So, there are two stretches of thread with different names and functions, the low line that goes together with the casting weight or lead wound up around the reels and that joins the fish hook with the lead, and the fishing line that goes from the reel to the lead. Two different threads are hooked in the lead, one the fishing line or main line that goes from the reel to the lead and another one which is called low line, which carries the fish hook and joins the lead directly tied up to the stick or by means of a twist-remover. The fishing line is usually joined to the lead by means of a twist-remover.

The operation of the improved weight is as follows:

Before putting the bait on the fish hook, a stretch of thread is wound up around the reels of the stick, leaving a piece free, long enough so that, once the bait is put on the fish hook, both can lodge in the existing cavity inside the weight body, on whose upper end a slot has been made to temporarily hold the end of the fishing line, filling in the cavity with sand or other similar material, so that fish hook and bait are retained inside it during the throwing, whereas when the weight goes into the water, the material that retained them disappears either by scattering or by dissolving, releasing the living bait which, when moving inside the water, unwinds the fishing line and moves away from the point where it fell.

### BRIEF DESCRIPTION OF THE DRAWINGS

In order to supplement the description of the invention and to facilitate the interpretation of the structural, functional and form characteristics of its object, a drawing is attached in which the appearance of a preferred embodiment of the "Casting weight for bait and fishing line, for angling" that constitutes the object of the present invention, is schematically represented.

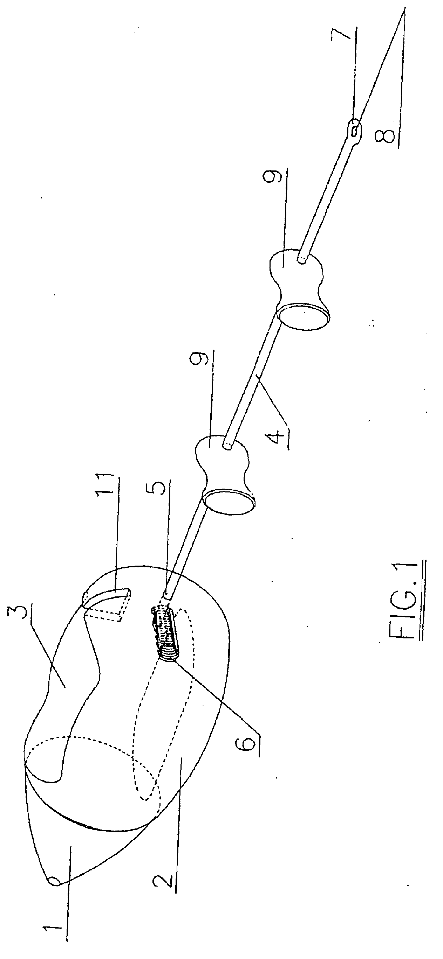

That drawing (Figure 1) is a perspective view of the thrower weight, with all its supplementary means prepared to be used.

### DESCRIPTION OF A PREFERRED EMBODIMENT

In order to clearly show the nature and scope of the advantageous application of the "Thrower weight of bait and fishing line, for angling" that constitutes the object of the claimed invention, its structure and use are next described, referring to the drawings that, since they represent a preferred embodiment of that object, with informative purpose, must be considered in their widest sense and must not limit the application and the content of the claimed invention.

The improved structure of the thrower weight comprises the following elements:
- A bi-metal part that is the weight proper, of ellipsoidal shape, crowned on its lower end when in use position with a conical part (1) made of lead, being the upper part (2) made of brass, in which there is a longitudinal cavity (3).
- A metal stick (4), preferably made of stainless steel, which is inserted through its lower part in the upper part of the weight (2), which has an orifice (5) for that purpose, being retained by a fixing screw (6), whereas its upper end takes on the shape of a hook (7) in order to link to the end part of the line (8).
- Two small reels (9) inserted in the stick (4), with variable discretionary gap, in order to wind up the fishing line around them (10), whose end next to the fish hook is temporarily inserted in a slot (11), made on the upper end of the body (2) in order to facilitate the lodging of the fish hook and the bait in the cavity (3), during the throwing.

## Claims

1. CASTING WEIGHT OF BAIT AND FISHING LINE, FOR ANGLING, whose structure comprises the following elements: A bi-metal part that is the weight proper, of ellipsoidal shape, crowned on its lower end when in use position with a conical part (1) made of lead, being the upper part (2) made of brass, in which there is a longitudinal cavity (3); A metal stick (4), preferably made of stainless steel, which is inserted through its lower part in the upper part of the weight (2), which has an orifice (5) for that purpose, being retained by a fixing screw (6), whereas its upper end takes on the shape of a hook (7) in order to link to the end part of the line (8); Two small reels (9) inserted in the stick (4), with variable discretionary gap, in order to wind up the fishing line around them (10), whose end next to the fish hook is temporarily inserted in a slot (11), made on the upper end of the body (2) in order to facilitate the lodging of the fish hook and the bait in the cavity (3), during casting.
